# EUROPÄISCHE PATENTSCHRIFT

(11) **EP 0 750 746 B1**
(45) Veröffentlichungstag und Bekanntmachung des Hinweises auf die Patenterteilung: **03.02.1999**
(21) Anmeldenummer: 95913113.7
(22) Anmeldetag: 14.03.1995
(51) Int. Cl.: G01N 30/72, G01N 21/71, G01N 1/00

(54) **VORRICHTUNG ZUR HANDHABUNG VON FLÜSSIGKEITEN FÜR ANALYTISCHE ZWECKE**
DEVICE FOR HANDLING LIQUIDS FOR ANALYTICAL PURPOSES
DISPOSITIF PERMETTANT DE MANIPULER DES LIQUIDES A DES FINS D'ANALYSE

(30) Priorität: 17.03.1994 DE 4409073
(43) Veröffentlichungstag der Anmeldung: 02.01.1997
(73) Patentinhaber: BODENSEEWERK PERKIN-ELMER GMBH, D-88662 Überlingen (DE)
(72) Erfinder: Berndt, Harald, Dr., 44287 Dortmund (DE)
(74) Vertreter: Schumann, Klaus, Dr.
(86) Internationale Anmeldenummer: EP9500952
(87) Internationale Veröffentlichungsnummer: WO9525280

(56) Entgegenhaltungen:
- EP-A- 0 208 901
- DE-A- 3 034 602
- DE-A- 4 134 519
- US-A- 3 806 250
- US-A- 4 902 891
- REVIEW OF SCIENTIFIC INSTRUMENTS, Bd.52, Nr.9, September 1981, NEW YORK US Seiten 1283 - 1295 L.G. RANDALL ET AL. 'direct coupling of a dense (supercritical) gas chromatograph to a mass spectrometer using a supersonic molecular beam interface'
- CLINICAL CHEMISTRY, Bd.28, Nr.9, September 1982, WINSTON US Seiten 1882 - 1886 C. ECKERS ET AL. 'on-line direct introduction interface for micro-liquid chromatography/mass spectrometry: application to drug analysis'
- ANALYTICAL CHEMISTRY, Bd.65, Nr.19, 1. Oktober 1993, COLUMBUS US J. POSTA ET AL. 'high-performance flow flame atomic absorption spectrometry for automated on-line separation and determination of Cr(III)/Cr(VI) and preconcentration of Cr(VI)'
- ANALYTICAL CHEMISTRY, Bd.59, Nr.8, 15. April 1987, COLUMBUS US Seiten 1246 - 1248 B.C. ERICKSON ET AL. 'applications of a versatile injection valve for flow injection analysis'
- ANALYTICAL CHEMISTRY, Bd.58, Nr.3, März 1986, COLUMBUS US Seiten 663 - 664 A. RIOS ET AL. 'new configuration for construction of pH gradients in flow injection analysis'

## Beschreibung

Die Erfindung betrifft eine Vorrichtung und ein Verfahren zur Handhabung von strömenden Flüssigkeiten für analytische Zwecke, wie sie aus dem Oberbegriff des Anspruchs 1 bzw. des Anspruchs 15 hervorgehen.

Dabei kann eine chemische Reaktion unter hoher Temperatur durchgeführt werden. Die Handhabung kann aber auch in einer Zerstäubung der Flüssigkeit zu einem Aerosol bestehen.

Insbesondere bezieht sich die Erfindung auf eine Vorrichtung zum Probeneintrag in der Atomspektroskopie, bei welcher eine Probenflüssigkeit zur Bildung eines Aerosols mittels einer Hochdruckpumpe unter Druck durch ein aufgeheiztes Rohr geleitet wird.

Eine andere Anwendung der Erfindung ist eine Vorrichtung zur Durchführung eines Aufschlusses an einer Flüssigkeit bei hoher Temperatur und hohem Druck im kontinuierlichen Durchfluß.

Die Erfindung kann auch angewandt werden, um gleichzeitig einen Aufschluß einer Probenflüssigkeit vorzunehmen und anschließend unter Verwendung der gleichen Apparatur ein Aerosol für den Probeneintrag für atomspektroskopische Zwecke vorzunehmen.

### Zugrundeliegender Stand der Technik

Ein bekanntes Verfahren zur Zerstäubung von Flüssigkeiten besteht darin, daß die Flüssigkeit von einer Hochdruckpumpe durch ein aufgeheiztes Rohr gedrückt wird. Man bezeichnet eine solche Einrichtung als "Thermospray". Dabei wird die Flüssigkeit ganz oder teilweise verdampft. Auf dem Weg der Flüssigkeit durch das Rohr bilden sich zunächst in zunehmendem Maße Blasen in der Flüssigkeit. Dann ist das strömende Medium überwiegend Dampf mit immer weniger Flüssigkeits-Tröpfchen. Im Endbereich des Rohres bildet sich ein Dampfstrahl hoher Strömungs-Geschwindigkeit aus. Das Rohr ist dabei eine enge Kapillare.

Bei einer bekannten Thermospray-Anordnung ("Spectrochimica Acta" Bd.43 (1988), 983-987) wird eine mit einem Stahlrohr ummantelte Quarzkapillare verwendet. Am Ausgang der Quarzkapillare tritt reine Dampfphase aus. Eine ähnliche Anordnung mit einer Quarzkapillare in einem elektrisch geheizten Edelstahlmantel zum Probeneintrag in ein ICP ist in "Journal of Analytical Atomic Spectrometry" Bd.4 (1989), 213-217 beschrieben. Eine andere Anordnung ("Spectrochimica Acta" Bd. 41 (1986), 1287-1298) verwendet eine direkt elektrisch geheizte Metall-Kapillare.

Aus der US-A 4,902,891 ist auch bereits ein Thermosprayverdampfer bekannt, bei dem die aus einer chromatographischen Säule austretende Flüssigkeit einer langgestreckten Kapillarröhre zugeführt wird, die an ihrem stromabwärtigen Ende eine Strahldüse aufweist. Die Kapillarröhre wird derart beheizt, daß eine gesteuerte teilweise Verdampfung der Flüssigkeit stattfindet und verdampfte Flüssigkeit an dem Ende der Kapillarröhre über die Strahldüse abgegeben wird.

Die GB 2 240 176 A zeigt eine Apparatur zur Zerstäubung von Flüssigkeiten, z.B. aus einem Flüssigkeits-Chromatographen, als Aerosol in ein Massenspektrometer oder einen anderen Gasdetektor. Dort wird ein Aerosol dadurch erzeugt, daß eine zu zerstäubende Flüssigkeit durch ein inneres Rohr und ein gut wärmeleitendes Gas wie Wasserstoff oder Helium durch ein dazu konzentrisches, äußeres Rohr gedrückt wird. Das Gas wird durch eine Heizung beheizt. Dabei wird Flüssigkeit in dem inneren Rohr verdampft, wobei, wie bei einem üblichen Thermospray, thermisch zerstäubte Tröpfchen gebildet werden. Es handelt sich hier um eine Art Kombination von Thermospray und pneumatischer Zerstäubung, die nach der Beschreibung eher eine beheizte pneumatische Zerstäubung darstellt.

Es ist weiter bekannt, ein aus einer Thermospray-Anordnung austretendes Aerosol mittels eines Trägergases durch einen Kühler zu leiten, um Lösungsmittel zu kondensieren. Das kondensierte Lösungsmittel wird am Grunde eines u-förmigen Kühlers zu einem Abfallgefäß abgesaugt (Firmendruckschrift "SEPARATOR" der VESTEC Corporation, 9299 Kirby Drive, Houston, Texas 77054).

Es ist ferner bekannt, Aerosole, die zum Probeneintrag für die Atomspektrometrie mit einem pneumatischen Zerstäuber erzeugt werden, durch eine Verdampfung zu desolvatisieren und anschließend den Dampf durch eine Kühlung zu kondensieren. Auf diese Weise wird das flüssige Lösungsmittel abgeführt und ein trockenes Aerosol erhalten ("Spectrochimica Acta" Bd. 23B (1968), 553-555). Die gleiche Art der Trocknung des Aerosols erfolgt bei handelsüblichen Ultraschall-Zerstäubern für die ICP-Spektrometrie.

Durch die DE-C-3 521 529 (= EP-B-0 208 901 = US-A-4,886,359) ist eine Vorrichtung zum Zerstäuben von Probenflüssigkeit für spektroskopische Zwecke bekannt, bei welcher eine zu zerstäubende Flüssigkeit von einer Pumpe unter hohem Druck durch eine Düse gepumpt und durch die Düse zerstäubt wird. Dabei ist die Pumpe eine als gesonderte Baugruppe ausgebildete Hochdruckpumpe zur Erzeugung eines Mindestdruckes von 3 Mpa (30 bar). Das ist vorzugsweise eine kontinuierlich fördernde Mehrkolbenpumpe, wie sie für die Hochdruck-Flüssigkeits-Chromatographie (HPLC) verwendet wird. Die mit der Pumpe über eine Leitung verbundene Düse weist einen kleinsten Strömungsquerschnitt von weniger als 1,3 · 10⁻⁹ m² auf.

Die DE 30 26 155 Al zeigt ein Verfahren zur pneumatischen Zerstäubung von Flüssigkeiten mittels eines zu einem Flüssigkeitsrohr konzentrischen Druckgasstromes, bei dem der so erzeugte Flüssigkeitsnebel nachträglich durch Mikrowellenstrahlung verdampft wird. Nach der DE 32 33 130 Al wird eine flüssige Probe durch Zufuhr von elektrischer Energie von einem Träger verdampft. Feste Proben werden durch Zufuhr von Infrarotstrahlung verbrannt. Auf diese Weise entsteht ein trockenes Aerosol, das dem Spektrometer zugeführt wird.

Es sind weiterhin Probenaufschlüsse unter hohem Druck und hoher Temperatur für analytische Zwecke bekannt. Dabei werden die aufzuschließenden Flüssigkeiten in dickwandige Gefäße aus Edelstahl eingefüllt, die ein inertes Innengefäß aus PTFE enthalten (Aufschlußbomben). Diese Gefäße werden durch Kappen mit Schraubgewinden verschlossen. Die Gefäße werden dann mittels einer Heizvorrichtung erhitzt. Es handelt sich hierbei um ein diskontinuierliches Verfahren. Dieses Verfahren ist langwierig, da die Gefäße erst nach dem Abkühlen wieder geöffnet werden können.

### Offenbarung der Erfindung

Der Erfindung liegt die Aufgabe zugrunde, eine vorteilhafte Vorrichtung zur Handhabung von strömenden Flüssigkeiten zu schaffen, die es gestattet, die strömende Flüssigkeit unter hoher Temperatur zu halten, ohne daß der Strömungsweg durch Ablagerungen beeinträchtigt wird.

Speziell liegt der Erfindung die Aufgabe zugrunde, den Eintrag von Probenflüssigkeiten bei der Spektroskopie zu verbessern.

Eine weitere speziellere Aufgabe der Erfindung ist es, den Aufschluß von Probenflüssigkeiten für analytische Zwecke zu erleichtern und zu beschleunigen.

Erfindungsgemäß wird diese Aufgabe gelöst durch eine Vorrichtung zur Handhabung von strömenden Flüssigkeiten, enthaltend eine Hochdruckpumpe zum Fördem der Flüssigkeit, einen mit einem Auslaß der Hochdruckpumpe verbundenen Hohlraum, Mittel zum Aufheizen des Hohlraumes und eine dem Hohlraum nachgeschaltete Drossel, wobei die Drossel in bezug auf die Förderleistung der Hochdruckpumpe so bemessen ist, daß der Druck in dem Hohlraum über dem Sattdampfdruck der Flüssigkeit liegt, d.h., daß sich im Hohlraum bei der gewählten Temperatur kein Dampf bildet.

Eine solche Vorrichtung gestattet es, eine Flüssigkeit in dem Hohlraum im Durchfluß auf hohe Temperaturen zu erhitzen, ohne daß sich Dampf bildet. Die Dampfbildung wird durch den von der Hochdruckpumpe erzeugten hohen Druck verhindert. Bei der erfindungsgemäßen Anordnung wird ein quasi-geschlossenes System geschaffen, in welchem die Flüssigkeit unter einem Druck steht, der über dem Sattdampfdruck der Flüssigkeit liegt. Die Flüssigkeit kann unter diesem Druck auf hohe Temperaturen aufgeheizt werden. Der Hohlraum hat dabei vorteilhafterweise einen so geringen Fließwiderstand verglichen mit dem Fließwiderstand der Drossel, daß in dem Hohlraum ein im wesentlichen über dessen Länge hinweg konstanter Druck herrscht.

Wenn die Flüssigkeit durch eine als Düse ausgebildete Drossel austritt und damit entspannt wird, verdampft ein Teil der überhitzten Flüssigkeit. Dann wirken zwei Einflüsse zur feinen Zerstäubung der Flüssigkeit zusammen: Einmal wird die Flüssigkeit durch eine "Hochdruck"-Zerstäubung nach Art der DE-C-3 521 529 beim Austritt aus der Düse zerstäubt. Zum anderen erfolgt aber auch eine spontane Zerstäubung durch das Verdampfen eines Teils der Flüssigkeit. Es läßt sich dadurch ein sehr fein zerstäubtes Aerosol erzeugen. Die Ausbeute beim Eintrag in ein Spektrometer wird verbessert.

Bei einer anderen Anwendung der erfindungsgemäßen Anordnung wird die unter hohem Druck erzielbare hohe Temperatur benutzt, chemische Reaktionen einzuleiten, beispielsweise einen Aufschluß durchzuführen. Das geschieht kontinuierlich im Durchfluß. Da sich kein Dampf bildet, treten auch bei stark salzhaltigen Lösungen keine auskristallisierten Ablagerungen auf.

Die Erfindung umfaßt auch ein Verfahren zur Handhabung von strömenden Flüssigkeiten, das sich kennzeichnet durch die Verfahrensschritte: (a) Fördern der Probenflüssigkeit durch einen geheizten Hohlraum unter hohem, ein Verdampfen der Flüssigkeit verhindernden Druck, und (b) Hindurchleiten der Probenflüssigkeit durch eine ausgangsseitig an den Hohlraum angeschlossene Drossel unter Aufrechterhaltung eines gegenüber dem Atmosphärendruck wesentlich erhöhten Drucks, der den Sattdampfdruck der Probenflüssigkeit in dem beheizten Hohlraum übersteigt.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig. 1: zeigt ein erstes Ausführungsbeispiel der erfindungsgemäßen Vorrichtung zum Einbringen eines feinzerstäubten Aerosols in die Mischkammer eines Brenners für die Flammen-Atomabsorptions-Spektroskopie.
- Fig.2: zeigt als Einzelheit der Vorrichtung von Fig.1 der konstruktiven Aufbau einer dem Hohlraum nachgeschalteten Drossel.
- Fig.3: zeigt eine Vorrichtung ähnlich Fig.1, bei welcher die Erhitzung der Flüssigkeit in dem Hohlraum durch ein temperaturgeregeltes Flüssigkeitsbad erfolgt.
- Fig.4: zeigt eine Vorrichtung zur Erzeugung eines "trockenen" Aerosols zum Einbringen in ein ICP.
- Fig.5: zeigt eine Zusatzeinrichtung mit einer zwischen einem Probenwechsler und dem erhitzten Hohlraum eingeschalteten HPLC-Trennsäule.
- Fig.6: zeigt ein Probenaufschluß-System mit einem beheizten Hohlraum, einer Kühlstrecke und einer dieser nachgeschalteten Drossel.
- Fig.7: zeigt ein Probenaufschlußsystem ähnlich Fig.6.
- Fig.8: zeigt eine einfache Durchflußdrossel.
- Fig.9: zeigt eine Probenaufgabevorrichtung, welche ein Einbetten der mit Aufschlußmittel versetzten Probenflüssigkeit in einen Pfropfen von reinem Aufschlußmittel gestattet.
- Fig.10: zeigt Flammen-AAS-Signalverläufe, die mit gleichartigen Proben unter sonst gleichen Bedingungen unter Verwendung verschiedener Zerstäuber einschließlich eines Zerstäubers nach der Erfindung aufgenommen wurden.
- Fig.11: zeigt Signalverläufe ähnlich denen von Fig.10 für verschiedene Konzentrationen von Kupfer lösung und verschiedene Konzentrationen zugesetzter Salze.
- Fig.12: veranschaulicht bei einem Zerstäuber der vorliegenden Art den Einfluß der Temperatur auf die integrierte Extinktion, also das Integral über Peaks nach Art von Fig.10, bei der Flammen-AAS-Analyse verschiedener Metalle.
- Fig.13: zeigt für eine Apparatur mit einer Düse von 20 µm Durchmesser den Arbeitsdruck in dem beheizten Hohlraum in Abhängigkeit von der Flußrate für verschiedene Temperaturen.
- Fig.14: zeigt für einen Zerstäuber der vorliegenden Art die Abhängigkeit der Leistungsaufnahme von der Temperatur für verschiedene Flußraten.

### Beschreibung bevorzugter Ausführungsbeispiele

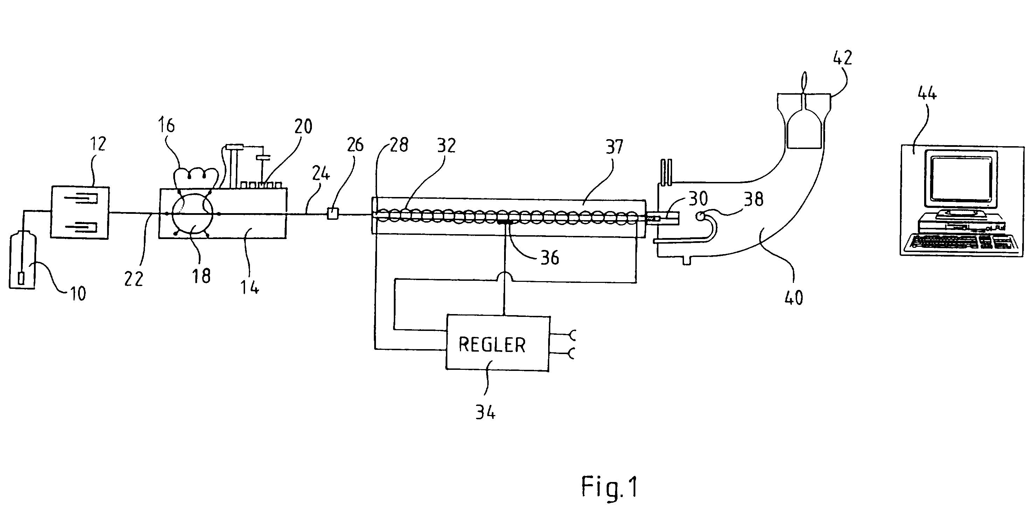

In Fig.1 ist mit 10 ein Vorratsgefäß für eine Transportflüssigkeit bezeichnet. Die Transportflüssigkeit wird aus dem Gefäß 10 durch eine Mehrkolben-Hochdruckpumpe 12 angesaugt. Solche Pumpen sind für die Hochdruck-Flüssigkeits-Chromatographie (HPLC) handelsüblich erhältlich. Die Mehrkolben-Hochdruckpumpe 12 fördert die Transportflüssigkeit unter hohem Druck zu einem Probenwechsler 14. Auch solche Probenwechsler sind für die Hochdruck-Flüssigkeits-Chromatographie handelsüblich erhältlich. Der Probenwechsler enthält in seiner einfachsten Form eine Probenschleife 16, ein Umschaltventil 18 und eine Dosiervorrichtung 20. Bei einer ersten Schaltstellung ist ein mit der Mehrkolben-Hochdruckpumpe 12 verbundener Einlaß 22 direkt mit einem Auslaß 24 verbunden. Die Probenschleife 16 ist mit der Dosiervorrichtung 20 verbunden und wird mit einer Probenflüssigkeit gefüllt. In einer zweiten Schaltstellung des Umschaltventils 18 wird die Probenschleife 16 in die von der Mehrkolben-Hochdruckpumpe 12 zum Ausgang 24 fließende Trägerflüssigkeits-Strömung eingeschaltet. Dadurch wird die in die Probenschleife dosierte Probenflüssigkeit unter den Druck der Trägerflüssigkeit gesetzt und von der Trägerflüssigkeit aus der Probenschleife 16 verdrängt und mitgeführt. Der Probenwechsler 14 kann durch einen internen Programmgeber gesteuert sein. Der Probenwechsler 14 ist aber auch durch eine externe Steuerung ansteuerbar.

In einer einfacheren Ausführung kann der Probenwechsler 14 auch durch ein handelsübliches manuelles oder elektrisch oder fluidgeschaltetes Probenaufgabeventil ersetzt sein. Derartige Ventile können such über einen Rechner 44 mit Interface mit HPLC-Software automatisch geschaltet werden.

Von dem Ausgang 24 fließt der Transportflüssigkeit-Strom durch ein Filter 26. Dieses Filter 26 kann ein ebenfalls aus der Hochdruck-Flüssigkeits-Chromatographie bekanntes Titansieb-Filter mit einer Maschenweite von 3 µm sein. Hinter dem Filter fließt der Transportflüssigkeit-Strom durch einen Hohlraum 28, der ausgangsseitig von einer Drossel 30 mit einer Düse abgeschlossen ist. Der Hohlraum 28 ist von einem Rohr aus einer Metall-Legierung mit hoher chemischer Resistenz gebildet. Als besonders vorteilhaft hat sich ein Rohr aus einer 80:20- oder 75:25-Platin-Iridium-Legierung erwiesen. Das Rohr ist von einer Heizwendel 32 umgeben. Die Heizwendel 32 wird von einem Regler 34 gespeist. Der Regler 34 erhält einen Temperatur-Istwert von einem Temperatur-Fühler 36 und hält eine Solltemperatur in dem Rohr aufrecht. Die Heizwendel ist von einer Wärmeisolation 37 umgeben.

Durch die Drossel 30 wird die unter hohem Druck durch das Rohr gedrückte Flüssigkeit zerstäubt. Vor der Drossel 30 ist noch ein kugelförmiger Konverterkörper 38 angeordnet. Die auf diese Weise gebildete Aerosolwolke tritt in die Gas-Mischkammer 40 eines Brenners 42 für die Flammen-Atomabsorptions-Spektroskopie ein.

Die Atomabsorptions-Messung und der Probenwechsler 14 können von einem Rechner 44 gesteuert werden. Mit Hilfe einer HPLC-Software können dabei auch aufeinanderfolgende transiente Signale gemessen werden.

Die Mehrkolben-Hochdruckpumpe 12 liefert einen Druck von mehr als 3 MPa (30 bar) in dem gesamten Hohlraum 28. Bei einer bevorzugten Ausführung wird mit einem Arbeitsdruck in dem Hohlraum 28 von etwa 20 MPa gearbeitet, jedenfalls im allgemeinen mit einem Druck, der über dem Sattdampfdruck der Probenflüssigkeit liegt.

Das den Hohlraum 28 bildende Rohr ist ein Platin-Iridium-Rohr von 15 cm Länge mit einem Außendurchmesser von 1,6 mm und einem Innendurchmesser von 1,0 mm. Der engste Querschnitt der Düse in der Drossel 30 beträgt 20 µm und ist somit wesentlich kleiner als der Querschnitt des rohrförmigen Hohlraumes 28.

Die Heizwendel 32 ist von einem mit Glasseide isolierten Heizdraht gebildet. Die Wärmeisolation 37 ist ein handelsüblicher, wärmebeständigen Isolierschlauch. Der Regler 34 ist ein PID-Regler mit einer 24 Volt, 10 Ampere Wechselstrom Niederspannungs-Versorgung. Der Temperatur-Fühler ist ein Pt 100-Thermoelement. Die Arbeitstemperatur ist üblicherweise 300° C.

Anstelle der Heizwendel 32 kann der von einem Metallrohr gebildete Hohlraum 28 auch direkt durch elektrischen Strom beheizt werden; das gilt auch für die nachstehend beschriebenen Rohre, die einen Metallmantel enthalten. Bei Verwendung einer Pt/Ir-Kapillare von 300 mm Länge, einem Außendurchmesser von 1,5 mm, einem Innendurchmesser von 1 mm, einer Flußrate von 3 ml/min wurde bei einer Leistungsaufnahme von ca. 70 W(ca. 3,5 V, ca. 20 A) eine Temperatur von 300°C gemessen. Eine gleiche Kapillare von 0,9 mm Außendurchmesser und 0,6 mm Innendurchmesser ergab bei der gleichen Flußrate die gleiche Temperatur bei einer Leistungsaufnahme von ca. 58 W (ca. 5,5 V, ca. 10,5 A).

Der Hohlraum 28 kann auch von einem aus Verbundwerkstoff bestehenden Rohr gebildet sein. Eine andere Möglichkeit besteht darin, daß der Hohlraum von einer innen mit PTFE beschichteten Hochdruck-Kapillare aus Edelstahl gebildet ist. Der Hohlraum kann von einem mit Stahlgewebe ummantelten PTFE-Schlauch gebildet sein. Es ist auch möglich, den Hohlraum aus einem Metallrohr zu bilden, in welches ein Kunststoff-Schlauch eingezogen ist oder das innenseitig mit Glas beschichtet ist (GLT, glass lined tubing; eine handelsübliche HPLC-Kapillare). Der Hohlraum kann auch von einem Quarzrohr gebildet sein.

Der Hohlraum 28 kann auch von einem Rohr aus Tantal gebildet sein. Tantal zeichnet sich durch eine hohe Chemikalien-Beständigkeit auch bei hohen Temperaturen aus.

Eine Kapillare aus Platin-Iridium kann relativ kurz in der Größenordnung von 10 bis 15 cm sein, wenn Temperaturen von 250 °C oder höher angewandt werden. In diesem Fall tritt kein Temperaturgleichgewicht ein. An der Düse erfolgt jedoch eine starke Durchmischung und damit ein Temperaturausgleich. Auf diese Weise können sehr kompakte und dispersionsarme Hochleistungs-Zerstäuber hergestellt werden.

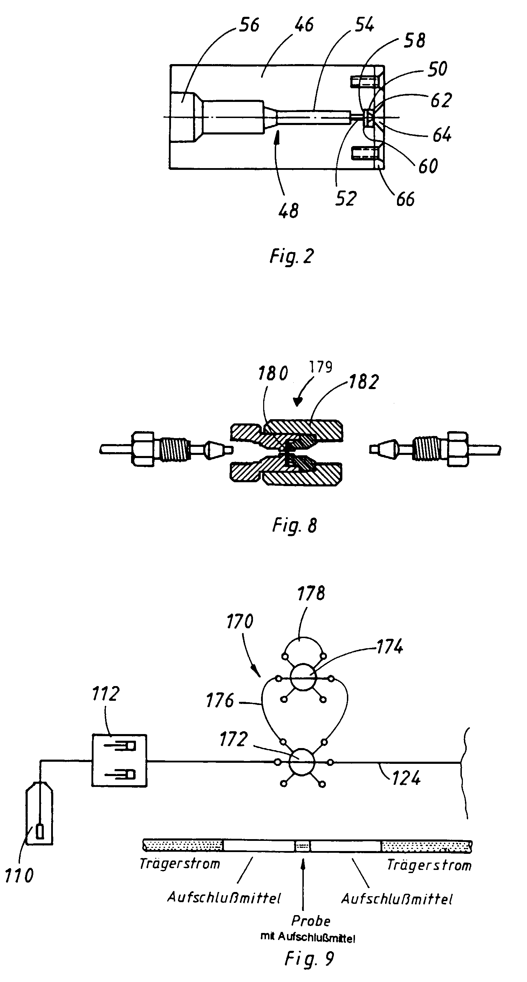

Die mit der Düse ausgebildete Drossel 30 ist in Fig.2 im einzelnen dargestellt. Die Drossel 30 weist ein Gehäuse 46 mit einer gestuften Durchgangsbohrung 48 auf. Die Durchgangsbohrung 48 hat einen austrittseitigen ersten Abschnitt 50, einen daran zur Eintrittseite hin anschließenden, verengten zweiten Abschnitt 52, daran anschließend einen weiteren, dritten Abschnitt und eintrittseitig eine Anschlußbohrung 56 für den rohrförmigen Hohlraum 28, wobei zwischen dem ersten und dem zweiten Abschnitt 50 bzw. 52 eine Schulter 58 gebildet ist. Der engste Querschnitt der Drossel 30 ist von einem Düsenkörper 62 aus Platin-Iridium oder Tantal gebildet, der über eine Dichtung 60 mit einer Durchbohrung an der Schulter 58 anliegt. Der Düsenkörper 62 hat fluchtend mit dem zweiten Abschnitt 52 eine (nicht sichtbare) Durchtrittsöffnung, deren Fläche kleiner als 1,3·10⁻⁹ m² ist. Bei einer erprobten Ausführung hat die Durchtrittsöffnung einen Durchmesser von 20 µm. Der Drosselkörper 62 ist durch eine Platte 66 gehalten, die einen konischen Durchbruch 64 aufweist und mit einer schmalen Stirnfläche am Rand des Drosselkörpers 62 anliegt. Die Platte 66 ist an der Stirnfläche des Gehäuses 46 durch Schrauben gehalten, wodurch der Drosselkörper 62 über die Dichtung 60 an der Schulter 58 mit Preßsitz gehaltert ist. Der Durchbruch 64 ist konisch mit einem Kegelwinkel von etwa 90° und erweitert sich zur Austrittseite hin.

Die Drossel 30 enthält die von Drosselkörper 62 bestimmte Düse mit einer Düsenöffnung, bei welcher das Verhältnis von Querschnitts-Durchmesser und Länge zu einer turbulenten Strömung führt. Weiterhin ist das Querschnittsverhältnis von Düsenöffnung und Hohlraum kleiner als 1:5. Die Länge der engsten Durchtrittstelle bzw. der Düsenöffnung ist gleich oder kleiner dem Durchmesser dieser engsten Durchtrittstelle bzw. Düsenöffnung.
Bei einer kreisrunden Düsenöffnung von 20 µm beträgt die typische Länge der engsten Durchtrittstelle bzw. Düsenöffnung etwa 10µm. Das entspricht dem halben Durchmesser. Typische Verhältnisse von Durchmesser zu Länge liegen in einem Bereich von 1:1 bis 1:0,4. Wird ein umgekehrtes Verhältnis gewählt, bei welchem die Länge der Durchtrittstelle ein Mehrfaches des Durchmessers der Durchtrittstelle beträgt, so wird ein Kanal gebildet, in dem es entsprechend dem normalen Thermospray zur Dampfbildung innerhalb des Kanals kommen kann. Diese Dampfbildung führt wiederum bei salzhaltigen Proben zum Abscheiden von Salzen und damit zum Zusetzen des Kanals.

Der Düsenkörper 62 kann unterschiedliche, zum Beispiel auch zylindrische Formen annehmen. In dem dargestellten Ausführungsbeispiel ist der Düsenkörper 62 als Plättchen ausgebildet. Wenn die Dicke des Plättchens so gewählt würde, daß sie gleich der Länge der engsten Durchtrittstelle bzw. der Düsenöffnung (10 µm) ist, hätte das Plättchen bei den herrschenden Drücken von bis zu 40 MPa keine ausreichende Druckfestigkeit. Aus diesem Grunde hat das Plättchen eine wesentlich größere Dicke von zum Beispiel 0,6 mm und enthält eine Innenbohrung, die sich in Stufen oder stufenlos zur engsten Durchtrittstelle bzw. Düsenöffnung verjüngt, wobei die Stufen größtenteils an den Kanten abgerundet sind.

Durch den hohen Druck bleibt die Flüssigkeit auch bei den hohen Temperaturen im Hohlraum 28 flüssig. Es bildet sich kein Dampf. Der hohe Druck wird durch die Drossel 30 am Ausgang des Hohlraumes 28 ermöglicht, gegen welche die Mehrkolben-Hochdruckpumpe 12 arbeitet. Da in dem Hohlraum 28 kein Dampf entsteht, werden auch keine Verdampfungswärmen verbraucht. Es kann daher eine bestimmte Temperatur mit geringerer Wärmezufuhr erreicht werden.
Dadurch, daß das Volumen relativ groß gemacht werden kann und die Flüssigkeit durch einen relativ kleinen Auslaßquerschnitt austritt, ergibt sich eine im Vergleich zu bekannten Thermospray-Anordnungen lange Aufenthaltsdauer der Flüssigkeit in dem Hohlraum 28. Dadurch wird sichergestellt, daß sich die Flüssigkeit stromabwärts der Temperatur der Wandung des Hohlraumes 28, d.h. des Rohres, annähert. Die große Aufenthaltsdauer kann entweder durch einen großen Innendurchmesser des Hohlraumes 28 von beispielsweise 1 mm bei einer Länge von 50 cm oder durch eine lange dünne Kapillare, z.B. von 0,3 mm Innendurchmesser und 5,55 m Länge, erreicht werden. Dabei kann das Rohr gewendelt sein, um größere Rohrlängen auf kleinem Raum unterzubringen.

Wenn die Flüssigkeit aus der Düse austritt, erfolgt eine Zerstäubung durch zwei Einflüsse: Einmal erfolgt eine mechanische Hochdruckzerstäubung. Zum anderen wird ein Teil der Flüssigkeit durch die Entspannung verdampft. Es entsteht ein sehr feines Aerosol. Es hat sich gezeigt, daß mit einer Vorrichtung der beschriebenen Art in der Flammen-AAS eine Aerosolausbeute von 80 bis 90 % erreicht werden kann. Dies gilt auch für hoch-salzhaltige Lösungen. Dadurch, daß sich in dem Hohlraum 28 kein Dampf bildet, erfolgt dort und in der Düse auch kein Auskristallisieren von Salzen.

Bei der beschriebenen Düsenöffnung mit einem Durchmesser von 20 µm und einer Flußrate von etwa 2,5 ml/min, ergibt sich ein Arbeitsdruck von 20 MPa. Bei Verwendung einer Platin-Iridium-Kapillare von 1 mm Innendurchmesser und dem Durchmesser der Düsenöffnung von 20 µm ergibt sich ein Querschnitts-Verhältnis von 1:2500.

Quantitativ ergibt sich folgendes:
Bei einer Flußrate von 2,5 ml/min und einer Düsenöffnung von 20 µm ergibt sich in der Düsenöffnung eine Strömungsgeschwindigkeit von 132 m/s. Die Durchsatzzeit, d.h. die Zeit, während welcher ein Flüssigkeitselement durch die Düsenöffnung mit einer Länge von 10 µm hindurchtritt, beträgt daher 75 ns.

In der Düsenöffnung herrscht eine turbulente Strömung. Es tritt daher an der Düsenöffnung ein großer Druckgradient von 20 MPa auf 0,1 MPa auf. Die Temperatur sinkt von 300 °C vor der Düsenöffnung auf etwa 100 °C. In der Flüssigkeit tritt während der extrem kurzen Durchsatzzeit von 75 ns kein Temperatur-Gleichgewicht auf. Eine Faustregel der Thermodynamik besagt, daß Zeiten von über 0,5 µs benötigt werden, bevor sich Zustandsänderungen einstellen können. Aus der Düsenöffnung tritt daher stark überhitzte Flüssigkeit aus. Erst nach dem Austritt aus der Düsenöffnung erfolgt eine teilweise Verdampfung der Flüssigkeit.

Durch den Konverterkörper 38 ist auch die Zerstäubung von Flüssigkeiten unterhalb ihres atmosphärischen Siedepunktes möglich. Dies ermöglicht auch die Zerstäubung von sehr hochsiedenden Flüssigkeiten wie konzentrierter Phosphorsäure. Auch einige gesättigte Salzlösungen zeigen eine starke Siedepunkterhöhung gegenüber reinem Wasser. Auch solche Flüssigkeiten können mit der beschriebenen Vorrichtung zerstäubt werden. Die erhöhte Temperatur ist auch in einem solchen Fall vorteilhaft, da mit der Temperaturerhöhung die Viskosität der Lösung stark gesenkt wird.

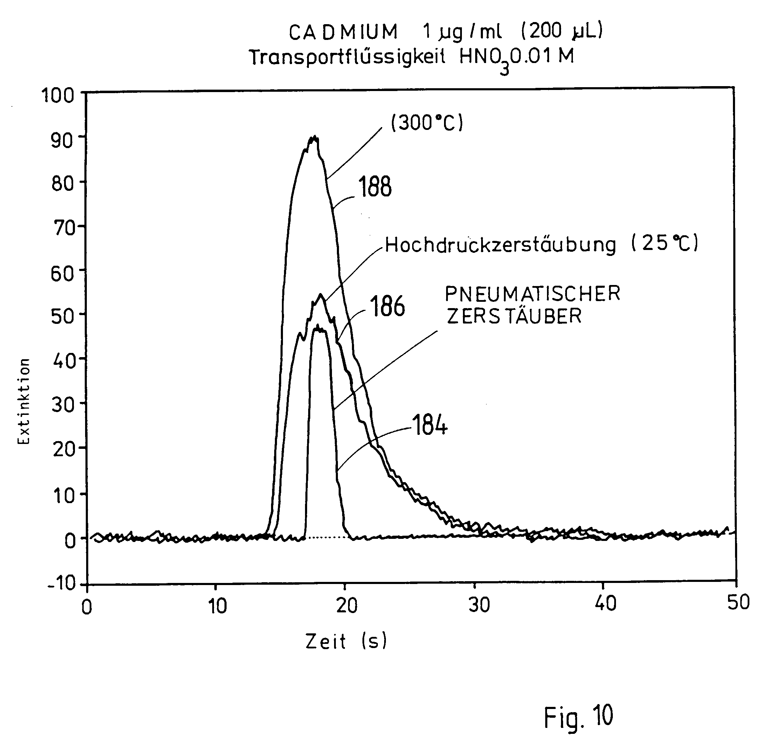

Fig.10 zeigt analytische Signalpeaks, wie sie durch Flammen-Atomabsorptions-Spektroskopie mit verschiedenen Typen von Zerstäubern unter sonst gleichen Bedingungen erhalten wurden. Gemessen wurde mit 200 µl einer Lösung von 1 µg/µl Cadmium in einer Transportflüssigkeit von 0,01-molarer HNO₃. Auf der Abszisse ist die Zeit in Sekunden aufgetragen. Die Ordinate zeigt die gemessene Extinktion in willkürlichen Einheiten. Die Kurve 184 zeigt den Zeitverlauf des Peaks, der mit einem pneumatischen Zerstäuber erhalten wurde. Die Kurve 186 zeigt den Peak, der mittels einer Hochdruck-Zerstäubung entsprechend der DE-C-3 521 529 bei einer Temperatur von 25 °C erzielt wurde. Die Kurve 188 zeigt den Signalverlauf, der mit einer Zerstäubung der vorstehend beschriebenen Art bei 300 °C gemessen wurde. Es ist erkennbar, daß das so erhaltene Signal sowohl höher als auch breiter ist als die Signale, die bei einer Zerstäubung nach dem Stand der Technik erhalten werden. Dies ist die Folge der wesentlich höheren Ausbeute an atomisierbarem Aerosol, die mit der hier beschriebenen Vorrichtung erzielbar ist; typischerweise beträgt der genutzte Aerosolanteil bei der Vorrichtung nach der vorliegenden Anmeldung 80-90% der Probenflüssigkeit.

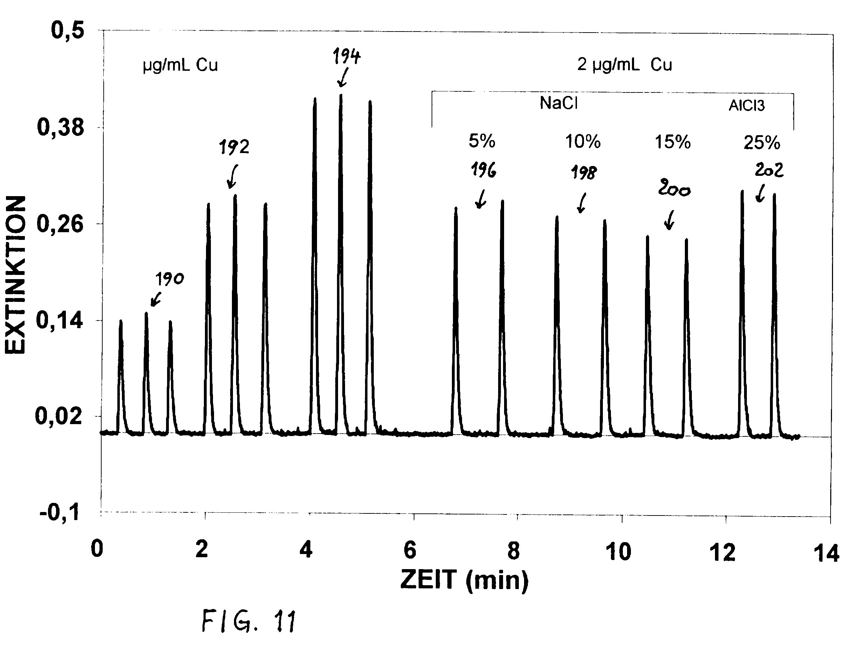

Fig.11 zeigt Signalverläufe, die mit Kupferlösungen unter Anwendung der vorstehend beschriebenen Apparatur und des beschriebenen Verfahrens erhalten wurden. Die Peaks 190, 192 und 194 wurden mit Lösungen erhalten, die 1 bzw. 2 bzw. 3 µg/ml Cu enthielten. Es zeigt sich eine gute Übereinstimmung gleichartiger Peaks und eine gute Linearität der Messung. Im rechten Teil von Fig.11 sind verschiedene Peaks 196, 198, 200 und 202 dargestellt, die alle mit einer Lösung von 2 µg/ml Cu aufgenommen wurden, jedoch mit zunehmenden Mengen von Salzen, nämlich 5% NaCl, 10% NaCl, 15% NaCl bzw. 25% AlCl₃. Es zeigt sich, daß die Messungen von den zugesetzten Salzen praktisch nicht beeinträchtigt werden.

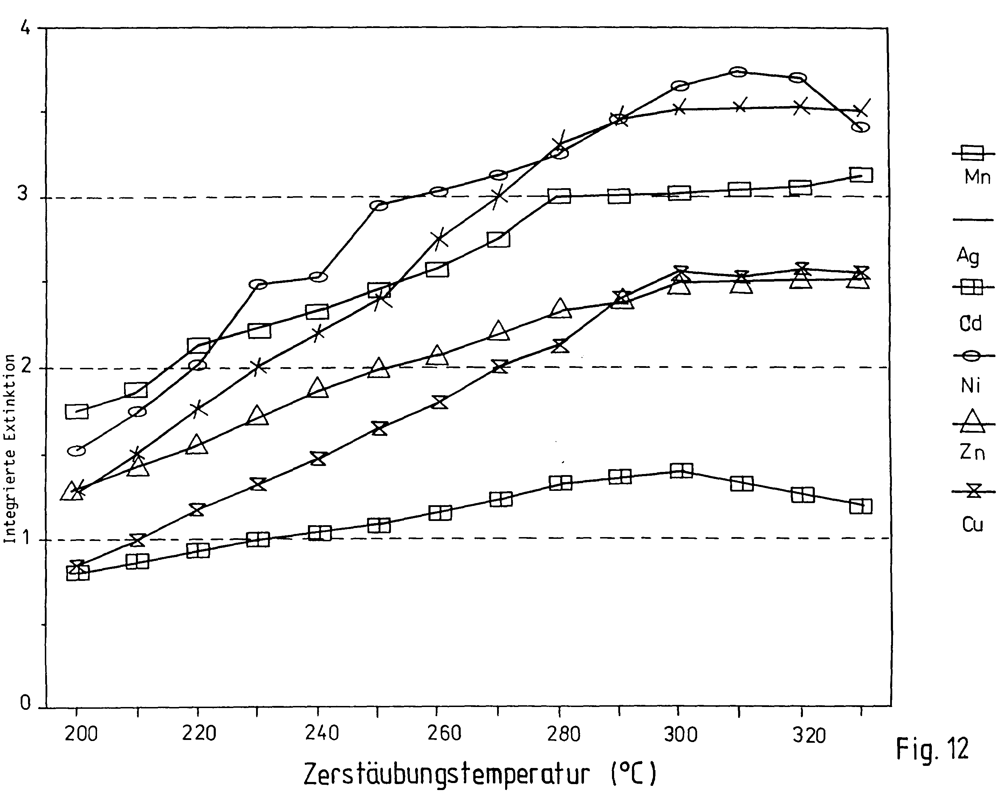

Fig.12 zeigt für verschiedene Metalle, nämlich Mn, Ag, Cd, Ni, Zn und Cu die integrierte Extinktion, also das Integral über die mit diesen Metallen bei der Atomabsorptions-Spektroskopie auftretenden Signalpeaks der in Fig.10 dargestellten Art, als Funktion der in dem Hohlraum 28 erzeugten Temperatur. Es zeigt sich daß die Kurven bei etwa 300 °C in eine Sättigung übergehen oder ein Maximum zeigen.

Es ist daher sinnvoll, mit einer Temperatur von 300 °C zu arbeiten, wie das vorstehend beschrieben ist.

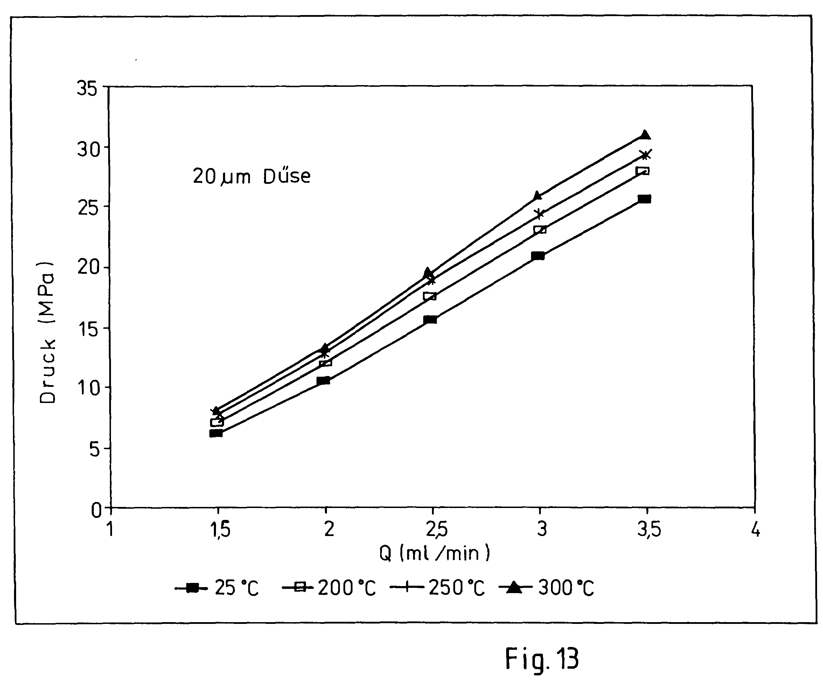

Fig.13 zeigt für den vorstehend beschriebenen Zerstäuber den in dem Hohlraum 28 herrschenden Arbeitsdruck in Abhängigkeit von der Flußrate Q und zwar für verschiedene Temperaturen der Transport- und Probenflüssigkeit in den Hohlraum 28 von 25 °C, 200 °C, 250 °C und 300 °C.

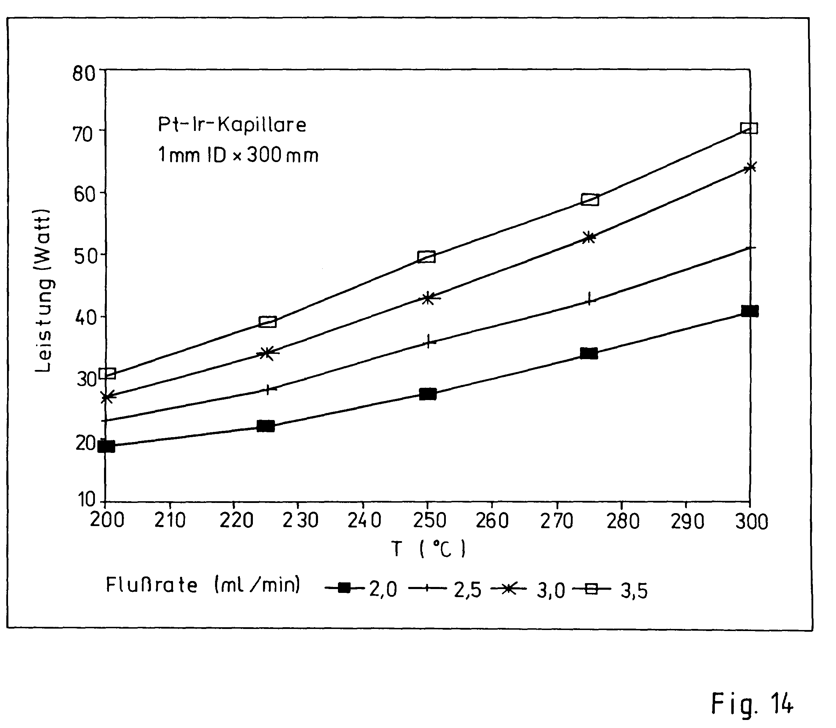

Fig.14 zeigt die Leistungsaufnahme der Heizwendel 32 für eine Platin-Iridium-Kapillare mit einem Innendurchmesser von 1 mm und einer Länge von 300 mm bei dem vorstehend beschriebenen Zerstäuber in Abhängigkeit von der Temperatur der Kapillare, und zwar für verschiedene Flußraten von 2,0 ml/min, 2,5 ml/min, 3 ml/min und 3,5 ml/min. Daraus ergibt sich im Gegensatz zu den bekannten Thermospray-Anordnungen mit typischen Flußraten von 1 ml/min oder weniger, daß mit der hier beschriebenen Hochdruckzerstäubung problemlos auch große Flußraten und dadurch ein großer Massentransport erreicht werden, da durch weitwandige Kapillaren eine größere Aufenthaltsdauer erreicht wird und außerdem nur weniger Wärme pro Gewichtseinheit der Flüssigkeit zugeführt werden muß.

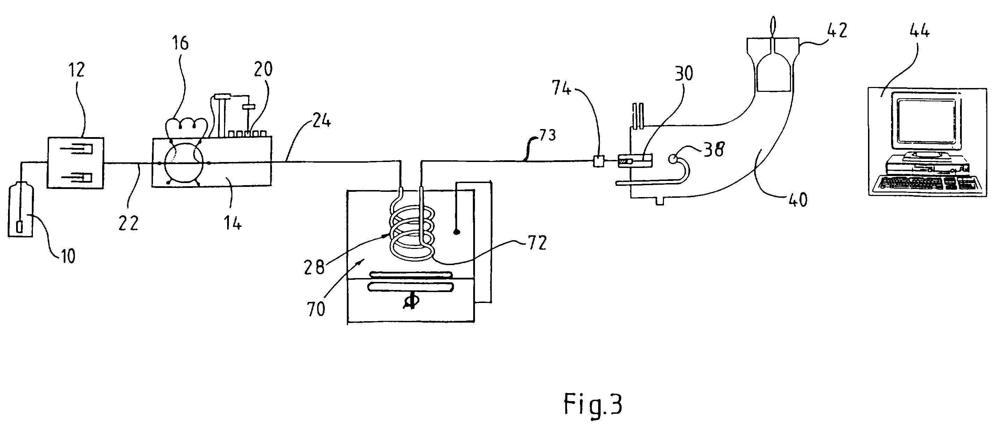

Die Vorrichtung von Fig.3 ist ähnlich aufgebaut wie die Vorrichtung von Fig.1 und 2. Entsprechende Teile sind in beiden Figuren mit den gleichen Bezugszeichen versehen und nicht mehr im einzelnen beschrieben.

Bei der Vorrichtung nach Fig.3 dient zur Heizung des Hohlraumes 28 ein temperaturgeregeltes Flüssigkeitsbad 70. Der Hohlraum 28 ist von einer gewendelten Kapillare 72 aus glasbeschichtetem Metallrohr gebildet, wie sie auch bei der Hochdruck-Flüssigkeits-Chromatographie Verwendung findet. Die Kapillare 72 ist über eine Verbindungsleitung 73, die Teil der Kapillare 72 sein kann und ein Siebfilter 74 ähnlich dem Siebfilter 26 enthält, mit der Drossel 30 verbunden.

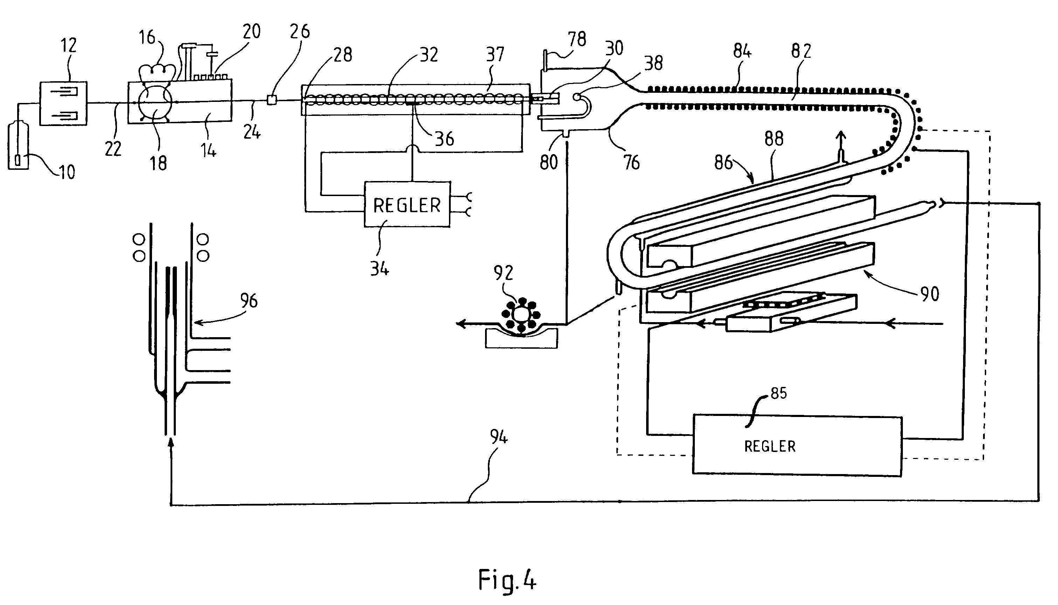

Die Vorrichtung von Fig.4 ist bis zu der Drossel 30 identisch mit der Anordnung von Fig.1. Entsprechende Teile sind auch hier mit den gleichen Bezugszeichen versehen wie in Fig.1 und nicht mehr im einzelnen beschrieben. Die Vorrichtung von Fig.4 kann auch in der Weise abgewandelt werden, wie es im Zusammenhang mit der Vorrichtung von Fig.1 beschrieben ist.

Das aus der Drossel 30 austretende Aerosol enthält noch Tröpfchen von Lösungsmittel, in dem die gesuchten Proben-Bestandteile gelöst sind. Der Dampfanteil in dem Aerosol ist trotz der vorherigen Erhitzung im Hohlraum 28 relativ gering. Das kann an dem Beispiel einer wässrigen Lösung erläutert werden: Die Enthalpie des Wassers bei 179°C beträgt 758,7 J/g (181,2 cal/g). Die Enthalpie des Wasserdampfes bei der gleichen Temperatur beträgt 2775,9 J/g. Selbst wenn sich das gesamte Wasser vor dem Austritt aus der Düsenöffnung auf Sattdampf-Temperatur befinden würde, müßten immer noch 2017,2 J/g zur vollständigen Verdampfung nach Austritt aus der Drossel 30 aufgebracht werden. Selbst bei einer ziemlich hohen Temperatur von 249°C würde die Enthalpiedifferenz noch 1720 J/g betragen. Die der unter Druck stehenden Flüssigkeit zugeführte Wärme reicht somit keineswegs aus, nach dem Entspannen eine vollständige Verdampfung der Flüssigkeit zu bewirken.

In vielen Fällen, z.B. beim Einleiten des Aerosols in ein induktiv gekoppeltes Plasma (ICP), stört der Anteil an darin noch enthaltenem Lösungsmittel. Er führt zu einer unerwünschten Verdünnung des Plasmas. Das Hochfrequenzverhalten des Plasmas wird dadurch so stark beeinflußt, daß es zu einem starken Signalrauschen und schließlich zum Erlöschen des Plasmas kommt. In einfachen Fällen kann es genügen, den Lösungsmittelanteil im Aerosol mit Hilfe einer gekühlten Zerstäuberkammer zu verringern.

Zum "Trocknen" des Aerosols genügt es aber im allgemeinen nicht, das Aerosol nur zu kühlen, da hierbei lediglich der dampfförmige Anteil des Lösungsmittels kondensiert wird. Es ist erforderlich, dem erhaltenen Aerosol zunächst weitere Wärme zuzuführen. Erst wenn auf diese Weise das darin noch enthaltene Lösungsmittel weitgehend verdampft ist, erfolgt die Kühlung.

Eine entsprechende Vorrichtung ist in Fig.4 in Verbindung mit der Vorrichtung nach Fig.1 dargestellt. Die Vorrichtung zum Nachverdampfen und Wiederabkühlen des Aerosols, um das Lösungsmittel zu entfernen, ist dabei an sich bekannt (z.B. Fa. Wissenschaftlicher Gerätebau Dr. Ing. Herbert Knauer GmbH, 14163 Berlin, Artikel No. 1032).

Das Aerosol wird in der beschriebenen Weise in einer Sprühkammer 76 erzeugt. An der Sprühkammer 76 ist ein Transportgas-Anschluß 78 vorgesehen, über den Argon als Trägergas eingeleitet wird. An der Unterseite der Sprühkammer 76 ist ein Ablauf 80 für kondensierte Flüssigkeit vorgesehen. An die Sprühkammer 76 schließt sich ein Rohrstück 82 an, das durch eine Heizung 84 beheizbar ist. In dem Rohrstück 82 verdampfen die Flüssigkeitsanteile, die nach dem Austritt aus der Drossel 30 noch in dem Aerosol enthalten sind. An das beheizte Rohrstück 82 schließt sich eine Kühlvorrichtung 86 an. Die Kühlvorrichtung 86 enthält eine stromaufwärtige erste Stufe 88 mit einer Flüssigkeitskühlung und eine zweite, stromabwärtige Stufe 90 mit einer Peltier-Kühlung. Die Heizung 84 und die Peltier-Kühlung sind durch einen Regler 85 temperaturgeregelt. Die Kühlvorrichtung 86 und der Ablauf 80 sind mit einer Schlauchpumpe 92 zum Abführen der kondensierten Flüssigkeit verbunden. Das so "getrocknete" Aerosol wird von dem Transportgas Argon über eine Leitung 94 in einen ICP-Brenner 96 geleitet.

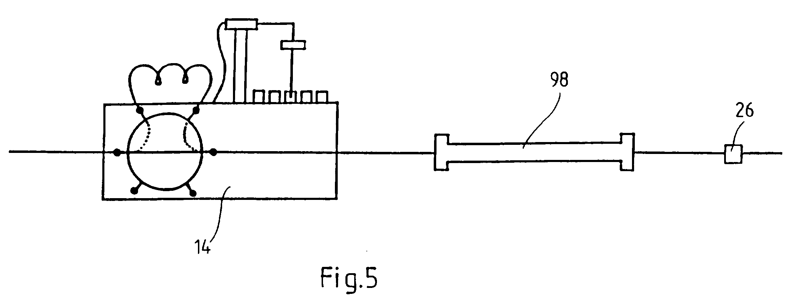

Fig.5 zeigt eine Abwandlung der Vorrichtung von Fig.1. Bei dieser Anordnung ist dem Probenwechsler 14 eine Hochdruck-Trennsäule 98 für die Hochdruck-Flüssigkeits-Chromatographie nachgeschaltet. Durch Einfügung dieser Hochdruck-Trennsäule 98 ergeben sich eine Vielzahl von HPLC-typischen Online-Trenn- und Anreicherungsmöglichkeiten für die Elementspurenanalytik und für eine verbesserte Elementspeziationstechnik. Im Gegensatz zu einer klassischen Kopplung von HPLC-Trenntechniken mit der Atomspektrometrie handelt es sich bei der hier beschriebenen Anordnung um ein in sich geschlossenes Hochdruckfließsystem in Form eines Hochleistungszerstäubers. Fig.5 zeigt dazu eine Abwandlung der Vorrichtungen nach Fig.1 bis 4, wobei die Hochdruck-Trennsäule 98 der Probenaufgabevorrichtung aus dem Probenwechsler 14, dem Umschaltventil 18 und der Probenschleife 16 folgt und dem Hochdruckraum 28 vorgeschaltet ist. Aus der Hochdruck-Trennsäule 98 austretende Fraktionen können unmittelbar in den Hochdruckraum 28 eingegeben werden, zum Beispiel bei der Bestimmung von Eisen(II) und Eisen(III) oder Chrom(III) und Chrom(VI) mit der Flammen-AAS. Beispielsweise mit einer 5 cm langen C18 RP-Säule können Elementspuren in Form von Komplexverbindungen aus einer gesättigten Kochsalzlösung abgetrennt werden. Die Kochsalzmatrix und die Elementspuren erreichen den Flammen-AAS-Brenner zu unterschiedlichen Zeiten. Dadurch unterbleiben die matrixbedingten Interferenzen bei der Flammen-AAS-Bestimmung. Durch die hohe Salzfracht kommt es hierbei jedoch zu einem allmählichen Zusetzen des Brennerschlitzes. In solchen und anderen Fällen kann es zweckmäßig sein, am Ausgang der Hochdruck-Trennsäule eine Hochdruck-Ventilanordnung vorzusehen, nicht nur bei dem vorerwähnten Beispiel zur Matrixabtrennung dient, sondern auch für die Elementanreicherung günstig ist. Es werden dann dieaus der Hochdruck-Trennsäule austretenden Elementspuren in den Hochdruckraum nacheinander oder gemeinsam eingegeben und einer atomspektrometrischen Analyse unterworfen. Diese Anordnung bringt auch besondere Vorteile für die ICP-Spektrometrie mit Desolvatisierung nach Fig.4, da die geheizte Strecke 82 nicht mit der Matrix in Berührung kommt, wodurch Memory-Effekte vermieden werden. Erprobt wurden ferner Anordnungen mit Vorsäulentechnik zur Voranreicherung der abzutrennenden Elementspuren, sowie weitere Elementspurenanreicherungen und Matrixabtrennungen mit Kationen- und Anionenaustauschersäulen. Mit Hilfe einer kombinierten Auswerte- und Steuersoftware, einem Probenwechsler,sowie automatisch schaltbaren Ventilen lassen sich diese Online-Trennungen vollautomatisch durchführen. Dabei hat es sich bewährt, auch die atomspetrometrishe Signalauswertung bei aufeinanderfolgenden Signalen mit einer HPLC-Software durchzuführen.

Die Drossel 30 in den Vorrichtungen nach den Fig. 1 bis 5 kann gegebenenfalls auch beheizbar oder thermisch isoliert sein.

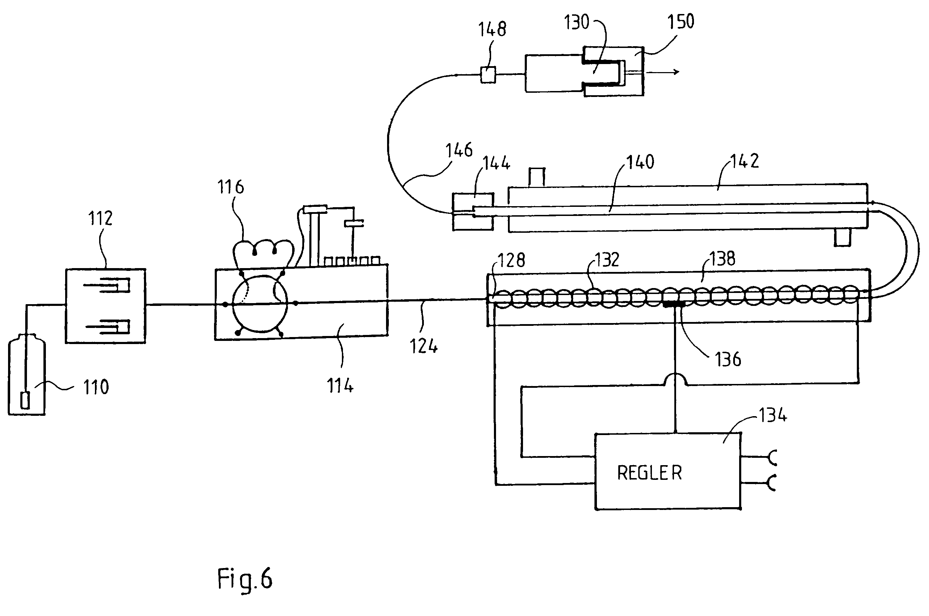

Fig.6 zeigt ein Probenaufschluß-System, bei welchem eine Probenflüssigkeit zusammen mit einem Aufschlußmittel unter Druck für eine bestimmte Zeit einer hohen Temperatur ausgesetzt wird, um eine Probe chemisch aufzuschließen. Das Probenaufschluß-System nach Fig.6 ist ähnlich aufgebaut wie die Vorrichtung nach Fig.1. Mit 110 ist in Fig.6 ein Vorratsgefäß für eine Transportflüssigkeit bezeichnet. Die Transportflüssigkeit enthält bei dieser Ausführung zugleich Aufschlußmittel. Dadurch wird auch an den Enden des Proben-Pfropfens eine ausreichende Konzentration von Aufschlußmittel gewährleistet. Anderenfalls würde durch Dispersion eine Verdünnung des Aufschlußmittels in der Probe erfolgen. Die Transportflüssigkeit wird aus dem Gefäß 110 durch eine chemisch inerte Mehrkolben-Hochdruckpumpe 112 angesaugt. Die Mehrkolben-Hochdruckpumpe 112 fördert die Transportflüssigkeit unter hohem Druck zu einem Probenwechsler 114. Der Probenwechsler 114 arbeitet wie im Zusammenhang mit Fig.1 beschrieben. Anstelle des Probenwechslers 114 kann auch hierein manuelles oder elektrisch oder fluidgeschaltetes Probenaufgabeventil benutzt werden. Von dem Ausgang 124 des Probenwechslers 114 fließt der Transportflüssigkeits-Strom durch einen Hohlraum 128, der ausgangsseitig von einer Drossel 130 abgeschlossen ist, die in ihrem Aufbau weitgehend der Drossel 30 entspricht. Der Hohlraum 128 ist ähnlich wie bei der Anordnung nach Fig.1 von einem Edelmetallrohr oder einem innenseitig mit Glas beschichteten Metallrohr gebildet, kann aber auch aus Quarz bestehen. Wie vorher kann das Rohr ebenfalls aus einer innen mit PTFE beschichteten Hochdruck-Kapillare aus Edelstahl oder einem von einem Stahlgewebe ummantelten PTFE-Schlauch gebildet sein. Es ist auch hier möglich, ein Metallrohr zu verwenden, in das ein Kunststoff-Schlauch eingezogen ist, oder ein Quarzrohr.

Das Rohr ist auf einem Teil seiner Länge von einer Heizwendel 132 umgeben. Die Heizwendel 132 wird von einem Regler 134 gespeist. Der Regler 134 erhält einen Temperatur-Istwert von einem Temperatur-Fühler 136 und hält eine Solltemperatur in dem Rohr aufrecht. Die Heizwendel 132 ist von einer Wärmeisolation 138 umgeben. Anstelle der Heizwendel 132 kann der von einem Metallrohr gebildete Hohlraum 128 auch direkt durch elektrischen Strom beheizt werden; das gilt auch für die anderen vorstehend genannten Rohre, die einen Metallmantel enthalten. Die Heizleistung kann ungleichmäßig über die Länge des Rohres verteilt sein, derart, daß sich eine möglichst gleichmäßige Temperatur der Flüssigkeit über die gesamte Länge des Hohlraums 128 hinweg ergibt.

Ein zweiter Abschnitt 140 des den Hohlraum 128 bildenden Rohres ist von einem Flüssigkeitskühler 142 umgeben. Durch den Flüssigkeitskühler 142 wird die Flüssigkeit auf eine Temperatur unter ihrem atmosphärischen Siedepunkt abgekühlt. Im Falle, daß das Rohr als Quarzrohr (6 oder 8 mm Außendurchmesser, 0,5 oder 1 mm Innendurchmesser, 1 m Gesamtlänge) ist der erste Abschnitt indirekt beheizt. Auf die kalten Enden des Quarzrohres sind hochdruckfeste Kunststoffverbindungsteile zum Anschluß an übliche HPLC-Standardverbindungen angebracht, zum Beispiel durch Kleben. Aus der Drossel 130 tritt dann eine dampffreie Flüssigkeit aus. Der Ausgang des Hohlraumes 128 ist über ein Übergangs stück 144 und einen inerten Schlauch 146 mit der Drossel 130 verbunden. Vor der Drossel 130 befindet sich ein Schutzfilter 148 ähnlich dem Filter 26 von Fig.1. Auf dem Gehäuse der Drossel 130 sitzt ein Aufsatz 150, durch welchen der aus der Drossel 130 austretende Aerosol-Strahl zu einem gleichmäßigen Flüssigkeitsstrom rekombiniert wird. Von hier aus kann die Flüssigkeit zu einzelnen Auffanggefäßen oder einem Fraktionssammler geleitet werden. Da hinter der Drossel 130 ein Niederdruck-Flüssigkeitsstrom entsteht, können über nachgeschaltete, bekannte Niederdruck-Fließsysteme automatische Online-Bestimmungsverfahren angewandt werden, z.B. photometrische Bestimmungen oder Atomabsorptionsbestimmungen nach dem Hydrid- oder Kaltdampfverfahren.

Die Drossel 130 kann auch als eine Kapillare ausgebildet sein. Die Kapillare kann einen Innendurchmesser von 50 µm aufweisen und eine Länge zwischen 50 mm bis 500 mm besitzen, abhängig von der Flußrate und dem gewünschten Gegendruck.

Ohne den Aufsatz 150 kann die Drossel 130 zur Hochdruck-Zerstäubung verwendet werden und zum Eintrag von Aerosol in ein atomspektroskopisches Analysengerät dienen wie vorstehend im Zusammenhang mit Fig.1 bis 4 für die Drossel 30 beschrieben wurde. Die Anordnung nach Fig.6 kann auf diese Weise zweifach genutzt werden, nämlich zum Probenaufschluß durch Hindurchleiten der Probenflüssigkeit zusammen mit dem Aufschlußmittel durch den geheizten Hohlraum 128 unter hohem, ein Verdampfen der Flüssigkeit verhindernden Druck und gleichzeitig zum Zerstäuben der aufgeschlossenen Probenflüssigkeit mittels einer den Hohlraum abschließenden Drossel, die einerseits die Aufrechterhaltung des Druckes in dem Hohlraum gewährleistet und andererseits die Zerstäubung der Flüssigkeit bewirkt. Dabei erfolgt bei der dargestellten Anordnung zwischen Aufschluß und Zerstäubung eine Kühlung der Probenflüssigkeit. Die Zerstäubung kann natürlich auch ohne den Kühlabschnitt erfolgen.

Die Drossel 130 kann auch entsprechend Fig.8 ausgebildet sein, wobei die Flüssigkeit niederdruckseitig über eine inerte HPLC-Schlauchverbindung (zum Beispiel 1/16" PTFE-Schlauch) weitergeleitt werden, wie vorstehend beschrieben wurde.

Eine grobe physikalisch-chemische Regel besagt, daß chemische Reaktionen mit einer Temperaturerhöhung von jeweils etwa 10K die Reaktions-Geschwindigkeit verdoppeln. Die Anwendung möglichst hoher Temperaturen verringert daher sehr stark die benötigte Aufschlußzeit. Die hier mögliche Verwendung von Kapillaren als Aufschlußgefäße gestattet es, hohe Drücke zu beherrschen und damit ohne Dampfbildung auch hohe Temperaturen anzuwenden.

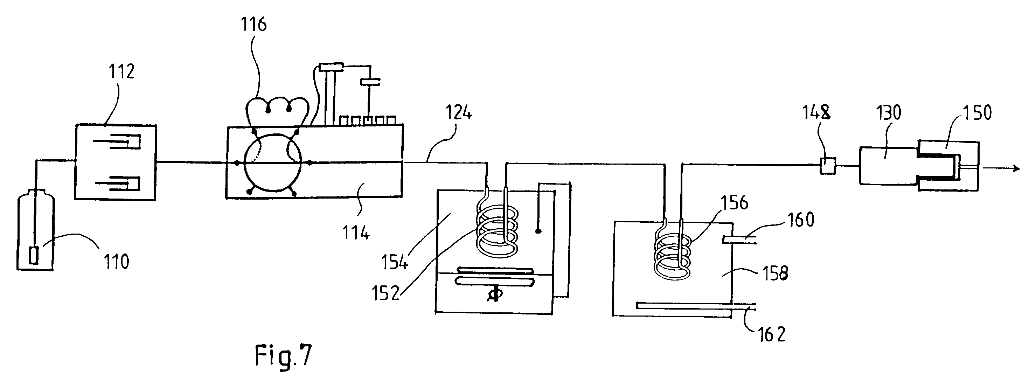

Das Probenaufschluß-System von Fig.7 ist ähnlich aufgebaut wie das Probenaufschluß-System von Fig.6. Entsprechende Teile sind in beiden Figuren mit den gleichen Bezugszeichen versehen und nicht mehr im einzelnen beschrieben.

Bei dem Probenaufschluß-System von Fig.7 wird ein Teil des Hohlraumes von einem gewendelten Rohr 152 gebildet. Dieses gewendelte Rohr 152 sitzt in einem thermostatisierten Flüssigkeits-Heizbad 154. Dem gewendelten Rohr 152 ist ein ähnliches gewendeltes Rohr 156 nachgeschaltet. Das gewendelte Rohr 156 ist in einem Kühlbad 158 angeordnet. Über Anschlüsse 160 und 162 wird ein ständiger Strom von Kühlflüssigkeit durch das Kühlbad 158 geleitet.

Das Flüssigkeitsbad kann durch einen Heizofen ersetzt werden, wie er zum Beispiel zur Beheizung von Trennsäulen in der Hochdruck-Flüssigkeits-Chromatographie im Handel erhältlich ist.

Die Drossel 130 kann beheizbar sein. Die Verbindungsleitung 146 und die Düse 30 oder Drossel 130 können thermisch isoliert sein.

Bei der Vorrichtung nach Fig.6 oder 7 kann die Drossel kann auch zwischen dem beheizten und dem gekühlten Abschnitt des Rohres angeordnet sein. In diesem Fall ist die Drossel entsprechend Fig.8 ausgebildet.

In der in Fig.8 gezeigten Anordnung enthält die Drossel 179 einen Düsenkörper 180, der beispielsweise als ein in eine Leitung eingefügtes, mit einer engen Düsenöffnung versehenes Plättchen ausgebildet ist. Das Plättchen ist im wesentlichen in gleicher Weise ausgebildet wie das Plättchen in der Drossel 30, die vorstehend im Zusammenhang mit Fig.2 beschrieben wurde. Der Düsenkörper 180 ist in einem zusammenschraubbaren Gehäuse 182 gehaltert. Die beiden Enden des Gehäuses 182 sind mit üblichen Anschlüssen versehen, wie sie bei der Hochdruck-Flüssigkeits-Chromatographie verwendet werden.

Wenn ein "Pfropfen" von einer mit einem Aufschlußmittel versetzten Probe von einer reinen Trägerflüssigkeit wie Wasser durch das System transportiert würde, dann würde eine Verdünnung des Aufschlußmittels in der Probe an den Rändern des Proben-Propfens stattfinden. Wenn man, um das zu verhindern, Aufschlußmittel als Transportflüssigkeit verwendet, wie das bei der Ausführung nach Fig.6 der Fall ist, dann muß das Aufschlußmittel durch die Hochdruckpumpe 112 gefördert werden, wofür eine chemisch inerte Hochdruckpumpe erforderlich wäre. Diese Schwierigkeiten können durch die in Fig.9 dargestellte Anordnung vermieden werden. Die Anordnung von Fig.9 stimmt weitgehend mit der entsprechenden Anordnung nach Fig.6 überein. Entsprechende Teile sind mit den gleichen Bezugszeichen versehen wie dort.

Bei der Anordnung nach Fig.9 ist zwischen der Hochdruckpumpe 112 und dem Hohlraum 128 eine Aufgabe-Vorrichtung 170 mit einem ersten Ventil 172 und einem zweiten Ventil 174 vorgesehen. Durch das erste Ventil 172 ist eine erste Schleife 176 wahlweise in die Strömung von der Hochdruckpumpe 112 zum Hohlraum einschaltbar. Die erste Schleife enthält das zweite Ventil 174. Durch das zweite Ventil 174 ist eine zweite Schleife 178 wahlweise in die erste Schleife 176 einschaltbar. Dabei wird die mit Aufschlußmittel versetzte Probenflüssigkeit in die zweite Schleife 178 gefüllt. Die erste Schleife 176 enthält weiteres Aufschlußmittel. Es kann dann nach dem Füllen der beiden Schleifen 176, 178 zunächst die zweite Schleife 178 durch das zweite Ventil 174 in die erste Schleife 176 eingeschaltet werden. Dann wird die erste Schleife 176 durch das Ventil 172 in einen Trägerflüssigkeits-Strom eingeschaltet, der von der Hochdruckpumpe 112 zu dem Hohlraum fließt. Auf diese Weise ist die mit Aufschlußmittel versetzte Probe an den Enden des Proben-Pfropfes von Aufschlußmittel umgeben. Es tritt keine Verdünnung des Aufschlußmittels in der Probe ein. Andererseits kann als Transportflüssigkeit eine nicht aggressive Flüssigkeit, z.B. Wasser, gewählt werden.

## Patentansprüche

1. Vorrichtung zur Handhabung von strömenden Flüssigkeiten, enthaltend
- eine Hochdruckpumpe (12; 112) zum Fördern der Flüssigkeit,
- einen mit einem Auslaß der Hochdruckpumpe (12; 112) verbundenen Hohlraum (28; 128),
- Mittel (32; 132) zum Aufheizen des Hohlraumes (28; 128) und
- eine dem Hohlraum (28; 128) nachgeschaltete Drossel (30; 130; 179),
**dadurch gekennzeichnet**, daß
- die Drossel in bezug auf die Förderleistung der Hochdruckpumpe (12; 112) so bemessen ist, daß der Druck in dem Hohlraum (28; 128) über dem Sattdampfdruck der Flüssigkeit liegt, d.h., daß sich im Hohlraum (28; 128) bei der gewählten Temperatur kein Dampf bildet.

2. Vorrichtung nach Anspruch 1, **dadurch gekennzeichnet**, daß die Drossel (30; 130; 179) einen Drosselkörper (62; 180) mit einer Drosselöffnung enthält, bei welcher das Verhältnis von Durchmesser und Länge zu einer turbulenten Strömung führt.

3. Vorrichtung nach Anspruch 2, **dadurch gekennzeichnet, daß** die Drossel (30;130;179) eine engste Durchtrittstelle aufweist, deren Länge gleich oder kleiner als der Durchmesser dieser engsten Durchtrittstelle ist.

4. Vorrichtung nach Anspruch 3, **dadurch gekennzeichnet, daß** der Druck in dem Hohlraum (28;128) größer als 3 MPa ist und die engste Durchtrittstelle einen Querschnitt unter 1,3.10⁻⁹ m² besitzt.

5. Vorrichtung nach einem der Ansprüche 2 bis 4, **dadurch gekennzeichnet, daß** der Düsenkörper (62;180) als Plättchen ausgebildet ist, dessen Dicke größer ist als die Länge der Düsenöffnung, und daß das Plättchen eine Öffnung enthält, die sich zur Düsenöffnung hin verjüngt.

6. Vorrichtung nach einem der Ansprüche 1 bis 5, **dadurch gekennzeichnet, daß** dem Hohlraum (28) eine Hochdruck-Trennsäule (98) vorgeschaltet ist.

7. Vorrichtung nach Anspruch 6, **dadurch gekennzeichnet, daß** ausgangsseitig an die Hochdruck-Trennsäule (98) eine Hochdruck-Ventilanordnung angeschlossen ist.

8. Vorrichtung nach einem der Ansprüche 1 bis 7, **dadurch gekennzeichnet, daß** die Düse (30) in die Mischkammer (40) des Brenners (42) eines Atomabsorptions-Spektrometers ragt.

9. Vorrichtung nach einem der Ansprüche 1 bis 7, **dadurch gekennzeichnet, daß** der Drossel eine Nachverdampfungs-Einrichtung (82,84) zur weiteren Wärmezufuhr zu dem aus der Drossel (30) austretenden Aerosol nachgeschaltet ist.

10. Vorrichtung nach Anspruch 9, **dadurch gekennzeichnet, daß** der Nachverdampfungs-Einrichtung (82,84) eine Kühlvorrichtung (86,90) zum Abscheiden von verdampftem Lösungsmittel nachgeschaltet ist.

11. Vorrichtung nach Anspruch 10, **dadurch gekennzeichnet, daß** die Kühlvorrichtung (90) mit einem ICP-Brenner (96) verbunden ist.

12. Vorrichtung nach einem der Ansprüche 1 bis 11, dadurch gekennzeichnet, daß für die Verwendung der Vorrichtung zum Aufschließen einer Proben-Flüssigkeit
(a) zwischen Hochdruckpumpe (112) und Hohlraum (128) eine Aufgabe-Vorrichtung (170) vorgesehen ist,
(b) die Aufgabe-Vorrichtung (170) eine erste, wahlweise in die Strömung von der Hochdruckpumpe (112) zu dem Hohlraum (128) einschaltbare Schleife (176) aufweist und
(c) die Aufgabe-Vorrichtung (170) weiterhin eine zweite Schleife (178) aufweist, welche wahlweise in die erste Schleife einschaltbar ist.

13. Vorrichtung nach einem der Ansprüche 1 bis 10, **dadurch gekennzeichnet, daß**
(a) ein den Hohlraum (128) bildende Rohr einlaßseitig über einen Teil der Länge des Rohres beheizt und auslaßseitig über einen Teil der Länge des Rohres gekühlt ist und
(b) austrittseitig von der Drossel (130) Rekombinationsmittel (150) vorgesehen sind zur Rekombination des aus der Drossel (130) austretenden kalten Aerosols zu einem zusammenhängenden Flüssigkeitsstrom

14. Vorrichtung nach einem der Ansprüche 1 bis 13, **dadurch gekennzeichnet, daß** der Hohlraum (28;128) von einem Rohr aus einer Platin-Iridium-Legierung gebildet ist.

15. Verfahren zur Handhabung von strömenden Flüssigkeiten, **gekennzeichnet durch die Verfahrensschritte**:
(a) Fördern der Probenflüssigkeit durch einen geheizten Hohlraum unter hohem, ein Verdampfen der Flüssigkeit verhindernden Druck und
(b) Hindurchleiten der Probenflüssigkeit durch eine ausgangsseitig an den Hohlraum angeschlossene Drossel unter Aufrechterhaltung eines gegenüber dem Atmosphärendruck wesentlich erhöhten Drucks, der den Sattdampfdruck der Probenflüssigkeit in dem beheizten Hohlraum übersteigt.

16. Verfahren nach Anspruch 15, **dadurch gekennzeichnet, daß** die Probenflüssigkeit aus der Drossel in Form eines Aerosols austritt und das Aerosol in den Probeneintrag eines atomspektroskopischen Analysengerätes eingeleitet wird.

17. Verfahren nach Anspruch 15, **dadurch gekennzeichnet, daß** die Flüssigkeit zwischen dem Hohlraum und der Drossel gekühlt wird und die aus der Drossel austretende Flüssigkeit in den Probeneintrag eines atomspektroskopischen Analysengerätes eingeleitet wird.

18. Verfahren nach Anspruch 15 oder 16, **dadurch gekennzeichnet, daß**
(a) der Probenflüssigkeit ein Aufschlußmittel zugesetzt wird, und
(b) der Hohlraum auf eine den Aufschluß der Probenflüssigkeit bewirkende Temperatur aufgeheizt wird.

## Claims

1. A device for manipulating flowing liquids, containing
- a high-pressure pump (12; 112) for delivering the liquid,
- a cavity (28; 128) connected to one outlet of the high-pressure pump (12; 112),
- means (32; 132) for heating the cavity (28; 128) and
- a restrictor (30; 130; 179) connected downstream of the cavity (28; 128),
characterised in that
- the restrictor is so dimensioned, relative to the delivery of the high-pressure pump (12; 112), that the pressure in the cavity (28, 128) is above the saturated vapour pressure of the liquid, i.e. no vapour forms in the cavity (28; 128) at the chosen temperature.

2. A device according to claim 1, characterised in that the restrictor (30; 130; 179) contains a restrictor member (62; 180) having an opening in which the diameter to length ratio results in a turbulent flow.

3. A device according to claim 2, characterised in that the restrictor (30; 130; 179) has a narrowest passage point, the length of which is the same or shorter than its diameter.

4. A device according to claim 3, characterised in that the pressure in the cavity (28, 128) is greater than 3 MPa and the narrowest passage point has a cross-section smaller than 1.3 x 10⁻⁹ m².

5. A device according to any of claims 2 to 4, characterised in that the nozzle member (62; 180) is in the form of a small disc which is thicker than the length of the nozzle opening, and the disc has an opening which tapers towards the nozzle opening.

6. A device according to any of claims 1 to 5, characterised in that a high-pressure separating column (98) is connected upstream of the cavity (28).

7. A device according to claim 6, characterised in that a high-pressure valve arrangement is connected at the outlet end to the high-pressure separating column (98).

8. A device according to any of claims 1 to 7, characterised in that the nozzle (30) penetrates into the mixing chamber (40) of the burner (42) of an atomic absorption spectrometer.

9. A device according to any of claims 1 to 7, characterised in that downstream of the restrictor there is provided a re-evaporation device (82, 84) for supplying additional heat to the aerosol coming out of the restrictor (30).

10. A device according to claim 9, characterised in that downstream of the re-evaporation device (82, 84) there is disposed a cooling device (86, 90) for separating evaporated solvent.

11. A device according to claim 10, chracterised in that the cooling device (90) is connected to an ICP burner (96).

12. A device according to any of claims 1 to 11, characterised in that, for the purpose of using the device for breaking down a test liquid
(a) a feed device (170) is provided between the high-pressure pump (112) and the cavity (128),
(b) the feed device (170) has a first loop (176) optionally insertable into the flow from the high-pressure pump (112) to the cavity (128), and
(c) the feed device (170) has a second loop (178) optionally insertable into the first loop.

13. A device according to any of claims 1 to 10, characterised in that
(a) a tube constituting the cavity (128) is heated over part of its length on the inlet side and cooled over part of its length on the outlet side and
(b) recombination means (150) are provided on the outlet side of the restrictor (130) for recombining the cold aerosols coming out of the restrictor (130) to form a cohesive flow of liquid.

14. A device according to any of claims 1 to 13, characterised in that the cavity (28; 128) is formed by a tube made of a platinum-iridium alloy.

15. A method of manipulating flowing liquids, characterised by the following steps:
(a) delivering the test liquid through a heated cavity at high pressure, which prevents the liquid from evaporating and
(b) conveying the test liquid through a restrictor connected to the outlet end of the cavity while maintaining a pressure much higher than atmospheric pressure and above the saturated vapour pressure of the test liquid in the heated cavity.

16. A method according to claim 15, characterised in that the test liquid comes out of the restrictor in the form of an aerosol, and the aerosol is introduced into the sample inlet of an atomic line spectroscopy analytical device.

17. A method according to claim 15, characterised in that the liquid is cooled between the cavity and the restrictor, and the liquid coming out of the restrictor is introduced into the sample inlet of an atomic line spectroscopy analytical device.

18. A method according to claim 15 or 16, characterised in that
(a) a disintegrating means is added to the test liquid and
(b) the cavity is heated to a temperature for breaking down the test liquid.

## Revendications

1. Dispositif permettant de manipuler des liquides en circulation, comportant :
- une pompe haute pression (12 ; 112) pour faire circuler le liquide,
- un espace creux (28 ; 128) relié à un orifice de sortie de la pompe haute pression (12 ; 112),
- des moyens(32 ; 132) pour le chauffage de l'espace creux (28 ; 128) et
- un étranglement (30 ; 130 ; 179) placé derrière l'espace creux (28 ; 128),
caractérisé en ce que
- l'étranglement est mesuré par rapport à la capacité de refoulement de la pompe haute pression (12 ; 112) de telle sorte que la pression dans l'espace creux (28 ; 128) soit supérieure à la pression de vapeur saturée du liquide, c.-à-d. qu'il n'est pas généré de vapeur dans l'espace creux (28 ; 128) à la température choisie.

2. Dispositif selon la revendication 1, caractérisé en ce que l'étranglement (30 ; 130 ; 179) comporte un élément étrangleur (62 ; 180) avec une ouverture d'étranglement, dans laquelle le rapport entre diamètre et longueur provoque un écoulement turbulent.

3. Dispositif selon la revendication 2, caractérisé en ce que l'étranglement (30 ; 130 ; 179) présente un point de passage le plus étroit, dont la longueur est égale ou inférieure au diamètre de ce point de passage le plus étroit.

4. Dispositif selon la revendication 3, caractérisé en ce que la pression dans l'espace creux (28 ; 128) est supérieure à 3 MPa et en ce que le point de passage le plus étroit présente une section de passage inférieure à 1,3. 10⁻⁹ m².

5. Dispositif selon l'une des revendications 2 à 4, caractérisé en ce que l'élément buse (62 ; 180) est conçu sous forme d'une petite plaque, dont l'épaisseur est supérieure à la longueur de l'ouverture de la buse, et en ce que la petite plaque comporte une ouverture qui se rétrécit jusqu'à l'ouverture de la buse.

6. Dispositif selon l'une des revendications 1 à 5, caractérisé en ce que l'espace creux (28) est placé en amont d'une colonne de rectification haute pression (98).

7. Dispositif selon la revendication 6, caractérisé en ce qu'une disposition de soupape haute pression est reliée côté sortie à la colonne de rectification haute pression (98).

8. Dispositif selon l'une des revendications 1 à 7, caractérisé en ce que la buse (30) pénètre dans la chambre de mélange (40) du brûleur (42) d'un spectromètre à absorption atomique.

9. Dispositif selon l'une des revendications 1 à 7, caractérisé en ce qu'il est placé derrière l'étranglement, un dispositif de post-évaporation (82 ; 84) pour amener de la chaleur supplémentaire à l'aérosol sortant de l'étranglement (30).

10. Dispositif selon la revendication 9, caractérisé en ce qu'il est placé derrière le dispositif de post-évaporation (82 ; 84), un dispositif de refroidissement (86 ; 90) pour séparer le solvant évaporé.

11. Dispositif selon la revendication 10, caractérisé en ce que le dispositif de refroidissement (90) est relié à un brûleur à PCI (96).

12. Dispositif selon l'une des revendications 1 à 11, caractérisé en ce que, pour l'utilisation du dispositif pour la dissolution d'un liquide échantillon
(a) il est prévu un dispositif de chargement (170) entre la pompe haute pression (112) et l'espace creux (128),
(b) le dispositif de chargement (170) comporte une première boucle (176) qui peut être au choix placée dans le courant allant de la pompe haute pression (112) à l'espace creux (128), et
(c) le dispositif de chargement (170) comporte en outre une seconde boucle (178) qui peut au choix être placée dans le circuit de la première boucle.

13. Dispositif selon l'une des revendications 1 à 10, caractérisé en ce que
(a) un tube formant l'espace creux (128) est chauffé, côté entrée, sur une partie de la longueur du tube et est refroidi, côté sortie, sur une partie de la longueur du tube, et
(b) côté sortie de l'étranglement (130), il est prévu des moyens de recombinaison (150) pour recombiner l'aérosol froid sortant de l'étranglement (130) en un courant liquide homogène.

14. Dispositif selon l'une des revendications 1 à 13, caractérisé en ce que l'espace creux (28 ; 128) est formé d'un tube en un alliage platine-iridium.

15. Dispositif permettant de manipuler des liquides en circulation, caractérisé par les étapes consistant :
(a) à faire circuler le liquide échantillon à travers un espace creux chauffé sous une pression forte qui empêche une évaporation du liquide, et
(b) à faire passer le liquide échantillon à travers un étranglement relié à l'espace creux côté sortie, tout en maintenant une pression considérablement plus élevée comparée à celle de l'atmosphère, qui dépasse la pression de vapeur saturée du liquide échantillon dans l'espace creux chauffé.

16. Procédé selon la revendication 15, caractérisé en ce que le liquide échantillon sort de l'étranglement sous forme d'un aérosol, et en ce que l'aérosol est conduit dans le chargement d'échantillons d'un appareil d'analyse de spectroscopie atomique.

17. Procédé selon la revendication 15, caractérisé en ce que le liquide est refroidi entre l'espace creux et l'étranglement et en ce que le liquide sortant de l'étranglement est conduit dans le chargement d'échantillons d'un appareil d'analyse de spectroscopie atomique.

18. Procédé selon la revendication 15 ou 16, caractérisé en ce que
(a) il est ajouté au liquide échantillon un agent de dissolution, et
(b) l'espace creux est chauffé à une température provoquant la dissolution du liquide échantillon.
